# EUROPÄISCHE PATENTSCHRIFT

(11) **EP 2 088 299 B1**
(45) Veröffentlichungstag und Bekanntmachung des Hinweises auf die Patenterteilung: **29.03.2017**
(21) Anmeldenummer: 08021963.7
(22) Anmeldetag: 18.12.2008
(51) Int. Cl.: F02B 29/04, F28F 9/02, F28D 7/16, F28D 9/00

(54) **Wärmetauscher zur Ladeluftkühlung, Verfahren zur Herstellung eines Wärmetauschers zur Ladeluftkühlung**
Heat exchanger for cooling charged gas, method for manufacturing a heat exchanger for this purpose
Echangeur thermique destiné au refroidissement de l'air de suralimentation, procédé destiné à la fabrication d'un échangeur thermique destiné au refroidissement de l'air de suralimentation

(30) Priorität: 06.02.2008 DE 102008007916
(43) Veröffentlichungstag der Anmeldung: 12.08.2009
(73) Patentinhaber: MAHLE Behr GmbH & Co. KG, 70469 Stuttgart (DE)
(72) Erfinder: Hendrix, Daniel, 70736 Fellbach (DE); Wegner, Jürgen, 73054 Eislingen/Fils (DE)
(74) Vertreter: Grauel, Andreas

(56) Entgegenhaltungen:
- EP-A1- 0 234 942
- EP-A1- 0 756 149
- DE-A1- 19 902 504
- US-A1- 2005 056 411
- US-A1- 2006 278 377
- US-B1- 6 341 649

## Beschreibung

Die vorliegende Erfindung betrifft einen Wärmetauscher zur Ladeluftkühlung für einen Verbrennungsmotor eines Kraftfahrzeuges sowie ein Verfahren zur Herstellung eines Wärmetauschers nach einem der Ansprüche 1-12.

Zur Reduzierung der Emissionen von Verbrennungsmotoren für Kraftfahrzeuge sowie zur Leistungssteigerung der Verbrennungsmotoren wird die aus der Umgebung angesaugte Luft in zumindest einer Kompressorstufe verdichtet und so auf ein höheres Druckniveau gebracht. Aufgrund der Verdichtung kommt es zu einer Temperatursteigerung der verdichteten Ladeluft. Luft mit höherer Temperatur weist ein größeres Volumen auf als dieselbe Luftmenge bei einer geringeren Temperatur. Zur Reduzierung der Emissionswerte sowie zur Leistungssteigerung ist es erforderlich, dass zur Verbrennung möglichst viel Sauerstoff im Verbrennungsgemisch enthalten ist. Aus diesem Grund wird die aufgeladene Luft nach dem Aufladen wieder abgekühlt.

Dabei ist sowohl die einstufige als auch die mehrstufige Aufladung bekannt. Bei der mehrstufigen Aufladung wird die Ladeluft in mehreren Stufen verdichtet, anschließend wieder gekühlt, weiterverdichtet, wieder gekühlt usw..

Dabei gibt es zwei Prinzipien der Ladeluftkühlung. Zum einen die direkte Ladeluftkühlung und zum anderen die indirekte Ladeluftkühlung. Dabei können direkte und indirekte Ladeluftkühlung auch kombiniert sein.

Bei der direkten Ladeluftkühlung wird die Ladeluft direkt von der Umgebungsluft abgekühlt.

Bei der indirekten Ladeluftkühlung wird die Ladeluft von einem Kühlmittel, insbesondere einer kühlwasserhaltigen Kühlflüssigkeit, gekühlt. Die Kühlflüssigkeit wird ihrerseits durch die Umgebungsluft abgekühlt.

Aus der DE 199 02 504 ist ein Wärmeübertrager, insbesondere ein Ladeluftkühler mit vom Kühlmittel durchströmten Scheiben bekannt. Ferner sind Zwischenräume vorgesehen, die von der Ladeluft durchströmt und mit Wellrippen ausgefüllt sind, wobei das von den Scheiben gebildete Paket in ein von der Ladeluft durchströmtes Gehäuse eingesetzt ist.

Aus der DE 196 54 365 ist ein Plattenwärmeübertrager bekannt. Der Plattenwärmeübertrager ist ein aus Stapelscheiben aufgebauter Ölkühler.

Aus der EP 0623798 ist ein Plattenwärmetauscher, insbesondere ein Öl/Kühlmittel-Kühler für Verbrennungskraftmaschinen bekannt.

Aus der DE 195 47 185 ist ein Wärmeübertrager mit Turbulenzeinlagen bekannt. Die Turbulenzeinlagen werden innerhalb eines Wärmeübertragers zur Verwirbelung eines hindurchströmenden Fluids verwendet. Die Turbulenzeinlage weist Stäbe auf zur Umlenkung des durch die Turbulenzeinlage fließenden Fluids.

Aus EP 0 234 942 A1 ist ein Wärmeübertrager mit Turbulenzeinlagen bekannt, die zwischen den Scheiben eines Scheibenpaares angeordnet sind.

Es ist Aufgabe der vorliegenden Erfindung, einen Wärmetauscher zur Ladeluftkühlung der eingangs genannten Art zu verbessern, insbesondere bauraumsparender und kostengünstiger auszubilden. Insbesondere besteht die Aufgabe darin, die Durchströmung der kühlmittelführenden Strömungskanäle zu verbessern und die Durchflussmenge zu vergrößern. Insbesondere soll ebenfalls die Steifigkeit der Scheiben sowie der Scheibenpaare des Wärmetauscherstapels vergrößert und gleichzeitig der Druckabfall des Kühlmittels im Kühlmittelkanal verringert sowie die wärmeübertragende Fläche vergrößert werden. Des Weiteren soll insbesondere der erforderliche Bauraum verkleinert und die Integration des Wärmetauschers in andere Bauteile verbessert werden.

Die Aufgabe wird durch die Merkmale des Anspruchs 1 gelöst.

Es wird ein Wärmetauscher zur Ladeluftkühlung für einen Verbrennungsmotor eines Kraftfahrzeuges vorgeschlagen mit zumindest einer Scheibe, wobei zwei benachbarte Scheiben zumindest ein Scheibenpaar sowie zumindest einen ersten Strömungskanal zur Durchströmung für zumindest ein Kühlmittel bilden. Zwischen zwei benachbarten Scheibenpaaren ist zumindest bereichsweise ein zweiter Strömungskanal zur Durchströmung für Ladeluft ausgebildet. Die Scheibenpaare bilden einen Wärmetauscherblock. Zumindest bereichsweise ist in dem zumindest einen ersten Strömungskanal zwischen den benachbarten Scheiben zumindest eine turbulenzerzeugende Einlage angeordnet. Die turbulenzerzeugende Einlage ist mit zumindest einem stauwehrartigen ausgebildeten Endabschnittsbereich zur Einström- bzw. zur Ausströmverbesserung des Kühlmittels in den bzw. aus dem zumindest einen ersten Strömungskanal sowie zur Festigkeitssteigerung des Wärmetauscherblocks ausgebildet, wobei der Endabschnittsbereich auf einer Überstandslänge in zumindest einen Zuführkanal und/oder in zumindest einen Abführkanal des Wärmetauscherblocks ragt und die turbulenzerzeugende Einlage in dem Endabschnittsbereich v- oder u-kanalförmig ausgebildet ist.

Ein Scheibenpaar ist dabei insbesondere aus einer ersten Scheibe und einer auf die erste Scheibe aufgesetzten und im Wesentlichen um 180° gekippten Scheibe ausgebildet. Insbesondere sind die Scheibenpaare aufeinander gestapelt und bilden einen Wärmetauscherstapel. Zwischen den Scheiben eines Scheibenpaares ist ein erster Strömungskanal zur Durchströmung für zumindest ein Kühlmittel, insbesondere ein Kühlmittelströmungskanal, ausgebildet. Zwischen zwei benachbarten Scheibenpaaren, insbesondere zwischen zwei Scheiben von benachbarten Scheibenpaaren, ist ein zweiter Strömungskanal zur Durchströmung für Ladeluft, insbesondere ein Ladeluftströmungskanal, ausgebildet. Die Scheiben und/oder die Scheibenpaare sind formschlüssig, insbesondere durch Falzen, Verkrimpen usw. und/oder stoffschlüssig, insbesondere durch Löten, Schweißen, Kleben usw. miteinander verbunden und bilden einen Wärmetauscherblock.

Zumindest bereichsweise ist in dem zumindest einen ersten Strömungskanal, insbesondere in den ersten Strömungskanälen, zwischen den benachbarten Scheiben, insbesondere eines Scheibenpaars, zumindest eine turbulenzerzeugende Einlage angeordnet. Die zumindest eine turbulenzerzeugende Einlage weist zumindest einen stauwehrartig ausgebildeten Endabschnittsbereich zur Einström- bzw. Ausströmverbesserung des Kühlmittels in den bzw. aus dem zumindest einen ersten Strömungskanal auf. Insbesondere dient die zumindest eine turbulenzerzeugende Einlage zur Festigkeitssteigerung des Wärmetauscherblocks, insbesondere zumindest eines Scheibenpaares, insbesondere der Scheiben.

Gemäß der Erfindung ragt der Endabschnittsbereich, insbesondere der zumindest einen turbulenzerzeugenden Einlage, auf einer Überstandslänge in zumindest einen Zuführkanal zum Zuführen von Kühlmittel zu den Scheibenpaaren und/oder in zumindest einen Abführkanal zum Abführen des Kühlmittels aus dem zumindest einen Scheibenpaar.

In dem Endabschnittsbereich ist das erste turbulenzerzeugende Element besonders vorteilhaft v- oder u-kanalförmig ausgebildet. Auf diese Weise erfolgt eine besonders vorteilhafte Beströmung des ersten Strömungskanals, insbesondere der ersten Strömungskanäle aus dem Zuführkanal bzw. eine besonders vorteilhafte Abströmung in den Abführkanal.

Weiterhin kann besonders bevorzugt erfindungsgemäß vorgesehen werden, dass die zumindest eine turbulenzerzeugende Einlage mit zumindest einer Scheibe verbunden, insbesondere formschlüssig, insbesondere durch Verkrimpen, Falzen, Bördeln usw., und/oder stoffschlüssig, insbesondere durch Löten, Schweißen, Kleben usw., verbunden ist. Ferner kann vorgesehen sein, dass die zumindest eine turbulenzerzeugende Einlage einstückig mit der zumindest einen Scheibe ausgebildet, bzw. mit den Scheibenpaaren ausgebildet, bzw. in die zumindest eine Scheibe bzw. die Scheiben zumindest eines Scheibenpaares bzw. der Scheibenpaare eingeprägt bzw. eingebracht ist.

In einer weiteren vorteilhaften Ausführung der Erfindung ist die zumindest eine turbulenzerzeugende Einlage, sind insbesondere die turbulenzerzeugenden Einlagen, zumindest bereichsweise labyrinthartig ausgebildet und/oder weisen im Wesentlichen burgzinnenförmige Ausprägungen auf. Auf diese Weise kann besonders vorteilhaft die Wärmeübertragungsleistung verbessert und gleichzeitig der Druckabfall des Kühlmittels verringert werden.

Gemäß einer weiteren vorteilhaften Ausgestaltung der Erfindung weisen die Ausprägungen zumindest eine Ausprägungsbreite auf, wobei die Ausprägungsbreite in zumindest eine Strömungsrichtung des Kühlmittels zumindest abschnittsweise steigt und/oder gleich bleibt und/oder abnimmt. Insbesondere weist die zumindest eine turbulenzerzeugende Einlage somit besonders vorteilhaft beispielsweise im Einströmbereich des Kühlmittels eine geringere Ausprägungsbreite auf, wodurch die Turbulenzwirkung besonders vorteilhaft vergrößert und die Wärmeübertragung besonders vorteilhaft gesteigert wird. In einem in Strömungsrichtung des Kühlmittels weiter hinten befindlichen Abschnitt ist die Ausprägungsbreite, insbesondere besonders vorteilhaft größer, so dass der Druckabfall geringer wird.

Ferner weisen in einer weiteren vorteilhaften Ausgestaltung der Erfindung die Ausprägungen zumindest eine Ausprägungslänge auf. Die zumindest eine Ausprägungslänge steigt dabei und/oder bleibt dabei gleich und/oder nimmt dabei in einer Richtung ab, wobei die Richtung einen Winkel α mit einer Strömungsrichtung des Kühlmittels aufweist. Auf diese Weise weist die Ausprägung, insbesondere in Strömungsrichtung der Ladeluft, zunächst eine geringere Ausprägungslänge auf als in Strömungsrichtung der Ladeluft gesehen in einem hinteren Bereich. Auf diese Weise kann besonders vorteilhaft der Ladeluft zunächst besonders viel Wärme entzogen werden. Gleichzeitig kann dabei der Druckabfall der Ladeluft in einem Bereich - in Ladeluftströmungsrichtung gesehen - weiter hinten verringert werden.

Gemäß einer weiteren vorteilhaften Ausgestaltung der Erfindung weist zumindest eine Scheibe, insbesondere die Scheiben, zumindest eine napfartige Einprägung, insbesondere zumindest zwei napfartige Einprägungen, auf. Die zumindest eine napfartige Ausprägung, insbesondere die zwei napfartigen Ausprägungen, beabstanden gleichzeitig besonders vorteilhaft benachbarte Scheibenpaare bzw. benachbarte Scheiben.

Ferner ist erfindungsgemäß besonders vorteilhaft vorgesehen, dass in dem zumindest einen zweiten Strömungskanal, insbesondere in den zweiten Strömungskanälen, zumindest ein zweites turbulenzerzeugendes Element, insbesondere zwei turbulenzerzeugende Elemente, zur Verbesserung der Wärmeübertragung zwischen Ladeluft und Kühlmittel vorgesehen sind.

In einer weiteren vorteilhaften Ausbildung der Erfindung ist ein Verhältnis zwischen einer ersten Kanalhöhe des ersten Strömungskanals, insbesondere des Kühlmittelkanals, zu einer zweiten Kanalhöhe des zweiten Strömungskanals, insbesondere des Ladeluftkanals zwischen 1 : 1,5 und 1 : 5, insbesondere zwischen 1 : 2 und 1 : 4. Auf diese Weise kann besonders vorteilhaft der Bauraum reduziert und die Wärmeübertragung zwischen Ladeluft und Kühlmittel, insbesondere Kühlflüssigkeit, besonders vorteilhaft optimal ausgestaltet werden.

In einer weiteren vorteilhaften Ausführung der Erfindung nimmt zumindest ein Gehäuse den Wärmetauscherblock zumindest bereichsweise, insbesondere vollständig, auf und/oder zumindest ein Gehäuse ist zumindest abschnittsweise als Saugrohrabschnitt eines Saugrohrs für einen Verbrennungsmotor und/oder zumindest als Kompressorgehäuseabschnitt eines Kompressorgehäuses für einen Verbrennungsmotor ausgebildet. Auf diese Weise kann der Bauraum besonders vorteilhaft reduziert werden, in dem der Wärmetauscher in ein anderes Bauteil besonders vorteilhaft integriert werden kann.

In einer weiteren vorteilhaften Ausbildung der Erfindung bildet die zumindest eine Strömungsrichtung des Kühlmittels, insbesondere der Kühlflüssigkeit, mit der zumindest einen Strömungsrichtung der Ladeluft einen Winkel β. Auf diese Weise kann die Wärmeübertragungsleistung zwischen Ladeluft und Kühlmittel, insbesondere Kühlflüssigkeit, besonders vorteilhaft erhöht und der zumindest eine Ein- und/oder Ausfuhrstutzen für die Ladeluft bzw. für das Kühlmittel, insbesondere die Kühlflüssigkeit, besonders vorteilhaft entsprechend der bauräumlichen Vorgaben im Motorraum eines Kraftfahrzeuges angeordnet werden.

In einer weiteren besonders vorteilhaften Ausführung der Erfindung wird der Wärmetauscher als Ladeluftkühler verwendet.

Ferner ist erfindungsgemäß ein Verfahren zur Herstellung eines Wärmetauschers vorgesehen, wobei die zumindest eine Scheibe, insbesondere die Scheiben, zumindest eines Scheibenpaares, insbesondere der Scheibenpaare, mittels eines umformenden Fertigungsverfahrens, insbesondere mittels Stanzen, Prägen, Pressen usw. hergestellt werden. Ferner werden aus den Scheiben Scheibenpaare mit zumindest jeweils zwei Scheiben gebildet, wobei besonders vorteilhaft zwischen die zwei Scheiben eines Scheibenpaares zumindest eine erste turbulenzerzeugende Einlage eingebracht wird. Die Scheiben, die Scheibenpaare und die zumindest eine erste turbulenzerzeugende Einlage, insbesondere die turbulenzerzeugenden Einlagen, werden stoffschlüssig, insbesondere durch Löten, Schweißen, Kleben usw., und/oder formschlüssig, insbesondere durch Falzen, Bördeln, Verkrimpen usw., miteinander verbunden.

In einer weiteren vorteilhaften Ausgestaltung ist der Wärmetauscher, insbesondere der Ladeluftkühler als I-Flow-Kühler ausgebildet. Insbesondere strömt dabei Ladeluft auf einer Seite des Wärmetauschers in den Wärmetauscher ein und auf einer anderen, insbesondere gegenüber liegenden Seite wieder aus dem Wärmetauscher heraus. Ferner strömt insbesondere Kühlmittel, insbesondere Kühlflüssigkeit, an einer Seite in den Wärmetauscher ein und auf einer anderen, insbesondere gegenüberliegenden Seite, aus dem Wärmetauscher wieder heraus.

In einer anderen vorteilhaften Ausgestaltung der Erfindung ist der Wärmetauscher, insbesondere der Ladeluftkühler, als U-Flow-Wärmetauscher ausgebildet. Dabei strömt Ladeluft an einer Seite in den Wärmetauscher ein, durchströmt diesen, wird u-förmig umgelenkt und strömt in entgegengesetzter Richtung zurück, um den Wärmetauscher an derselben Seite, an der die Einströmung erfolgte, wieder zu verlassen und aus dem Wärmetauscher herauszuströmen.

Ebenso kann vorgesehen sein, dass das Kühlmittel, insbesondere die Kühlflüssigkeit U-förmig strömt, d. h. an einer Seite in den Wärmetauscher einströmt, diesen durchströmt, u-förmig umgelenkt wird, in entgegengesetzter Richtung zurückströmt und an derselben Seite aus dem Wärmetauscher wieder ausströmt, in die das Kühlmittel in den Wärmetauscher eingeströmt ist.

In einer anderen Ausführung ist der Wärmetauscher als Abgaskühler ausgebildet, wobei das zu kühlende Medium keine Ladeluft, sondern Abgas, insbesondere rückgeführtes Abgas, ist.

In einer weiteren vorteilhaften Ausgestaltung ist der Wärmetauscher ein Ölkühler zur Kühlung von Getriebeöl eines Getriebes eines Verbrennungsmotors. In einer weiteren vorteilhaften Ausgestaltung ist der Wärmetauscher ein Kondensator oder ein Verdampfer bzw. ein Gaskühler für eine Klimaanlage eines Kraftfahrzeuges.

In einer weiteren vorteilhaften Ausgestaltung ist der Wärmetauscher ein Ladeluftkühler und/oder ein Abgaskühler und/oder ein Kühlmittelkühler und/oder ein zwei- oder mehrstufiger Ladeluftkühler zur mehrstufigen Abkühlung von Ladeluft.

Weitere vorteilhafte Ausgestaltungen der Erfindung ergeben sich aus den Unteransprüchen und aus der Zeichnung. Die Gegenstände der Unteransprüche beziehen sich sowohl auf den erfindungsgemäßen Wärmetauscher zur Ladeluftkühlung, sowie auf das erfindungsgemäße Verfahren zur Herstellung des Wärmetauschers zur Ladeluftkühlung.

Ausführungsbeispiele der Erfindung sind in der Zeichnung dargestellt und werden im Folgenden näher erläutert, wobei eine Beschränkung der Erfindung hierdurch nicht erfolgen soll. Es zeigen:
- Figur 1:: eine isometrische Schnittdarstellung eines Wärmetauschers;
- Figur 2:: eine Schnittdarstellung A-A durch den Wärmetauscher;
- Figur 3a:: eine Schnittdarstellung B-B durch den Wärmetauscher;
- Figur 3b:: eine Detaildarstellung C der Schnittdarstellung B-B durch den Wärmetauscher;
- Figur 4:: eine Explosionsdarstellung des Wärmetauscherblocks;
- Figur 5:: eine isometrische Darstellung des Wärmetauscherblocks des Wärmetauschers.

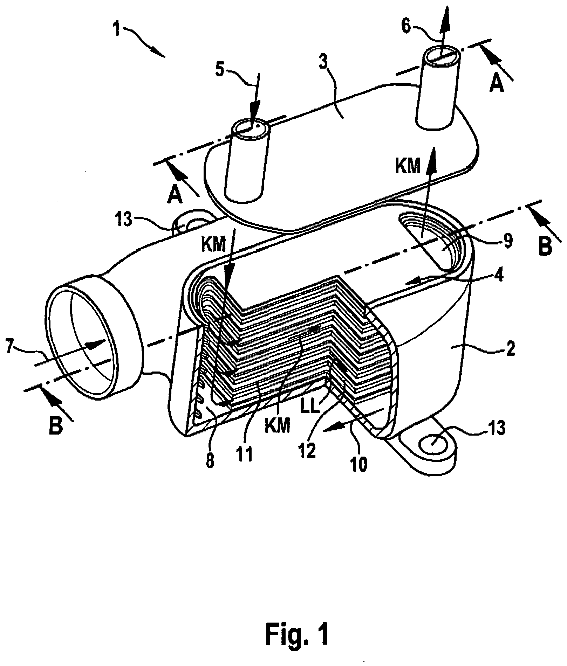

**Figur 1** zeigt eine isometrische Schnittdarstellung eines Wärmetauschers 1.

Der Wärmetauscher 1 ist insbesondere als Ladeluftkühler ausgebildet. Der Wärmetauscher 1 weist zumindest ein Gehäuse 2 sowie einen Deckel 3 und einen Wärmetauscherblock 4 auf.

Das Gehäuse 2 ist aus Metall wie beispielsweise Aluminium oder Grauguss ausgebildet. In einem anderen Ausführungsbeispiel ist das Gehäuse 2 aus einem Kunststoff oder aus Keramik oder aus einem Faserverbundwerkstoff hergestellt.

Das Gehäuse 2 ist mittels eines urformenden Fertigungsverfahrens wie beispielsweise Gießen, insbesondere Spritzgießen oder Kokillengießen, hergestellt. Ferner ist das Gehäuse in einem weiteren Ausführungsbeispiel mittels eines abtragenden Fertigungsverfahrens wie beispielsweise Fräsen, Drehen oder Bohren, insbesondere spanend bearbeitet.

Das Gehäuse weist einen nicht näher bezeichneten Eintrittsstutzen für Ladeluft auf, der im Wesentlichen einen Anschlussflanschring aufweist, welcher sich verjüngt und in das Gehäuse 2 eintritt bzw. in einem weiteren Ausführungsbeispiel einteilig mit dem Gehäuse 2 ausgebildet ist.

Das Gehäuse 2 weist einen nicht näher bezeichneten Hohlraum auf. Der Hohlraum ist insbesondere an die Geometrie des Wärmetauscherblocks 4 angepasst. Im dargestellten Ausführungsbeispiel weist der nicht näher bezeichnete Hohlraum eine im Wesentlichen quaderförmige Form auf, wobei im Wesentlichen an den kleinsten Quaderflächen, die insbesondere einander gegenüberliegend angeordnet sind und an die sich im Wesentlichen jeweils ein halbzylinderförmiger Körper anschließt. Dieser quaderförmige Raum mit sich jeweils anschließenden halbzylinderförmigen Raumelementen dient insbesondere zur Aufnahme des Wärmetauscherblocks 4.

Das Gehäuse 2 weist zumindest ein Befestigungselement, insbesondere zwei oder mehr Befestigungselemente 13 zur Gehäusebefestigung auf. Ein Befestigungselement 13 weist im Wesentlichen eine nicht näher bezeichnete Öffnung, beispielsweise zur Einführung einer Schraube oder eines Bolzens auf. Das zumindest eine Befestigungselement 13, insbesondere die Befestigungselemente 13, sind in einem weiteren Ausführungsbeispiel einstückig mit dem Gehäuse 2 ausgebildet bzw. in einem anderen Ausführungsbeispiel mit dem Gehäuse 2 verbunden.

Der Wärmetauscherblock 4 weist eine Mehrzahl von Scheibenpaaren 11 auf. Im Bereich der halbzylinderförmigen Ausbildung des Wärmetauscherblocks 4 ist ein im Wesentlichen ebenfalls halbzylinderförmig ausgebildeter Zuführkanal 8 bzw. an der gegenüberliegenden Seite ein im Wesentlichen zylinderförmiger Abführkanal 9 vorgesehen. Das Gehäuse 2 wird mit einem Deckel 3 verschlossen. Der Deckel 3 weist einen Kühlmitteleintrittsstutzen 5 und/oder einen Kühlmittelaustrittsstutzen 6 auf. Der Deckel 3 ist aus einem Metall wie beispielsweise Aluminium oder Stahl oder aus Edelstahl ausgebildet. In einem anderen Ausführungsbeispiel ist der Deckel 3 aus Kunststoff oder aus Keramik oder aus einem Faserverbundwerkstoff ausgebildet. Nach dem Einbringen des Wärmetauscherblocks 4 in das Gehäuse 2 wird der Deckel 3 auf das Gehäuse 2 aufgesetzt und verschließt dieses formschlüssig, insbesondere durch Krimpen, Falzen, Bördeln, und/oder stoffschlüssig durch Löten, Verschweißen, Kleben usw.

Das Gehäuse 2 weist ferner zumindest einen Ladeluftaustritt 10 zur Abführung der gekühlten Ladeluft auf. Der Ladeluftaustritt 10 ist im Wesentlichen trichterartig, ebenso wie der Ladelufteintrittsstutzen 7, ausgebildet. Über den Kühlmitteleintritt 5 strömt Kühlmittel in den Wärmetauscher, insbesondere in den Ladeluftkühler ein. Bei dem Kühlmittel KM handelt es sich um ein wasserhaltiges Kühlmittel bzw. eine wasserhaltige Kühlflüssigkeit. In einem anderen Ausführungsbeispiel kann es sich dabei aber auch um eine viskose Flüssigkeit, wie beispielsweise Öl, handeln. Das Kühlmittel tritt in den Zuführkanal 8 ein und über den Zuführkanal 8 in die ersten Strömungskanäle, durchströmt den Wärmetauscher 1 und strömt in den Abführkanal 9. Aus dem Abführkanal 9 strömt das Kühlmittel KM über den Kühlmittelaustritt 6 aus dem Wärmetauscher 1, insbesondere aus dem Ladeluftkühler, heraus.

Über den Ladelufteintrittsstutzen 7 tritt Gas, insbesondere zu kühlende Ladeluft, in den Wärmetauscher 1 ein, durchströmt die zweiten Strömungskanäle und verlässt den Wärmetauscher 1 durch den Austritt 10 zur Abfuhr des Gases, insbesondere der Ladeluft.

In einem anderen Betriebszustand weist das Gas am Austrittsstutzen 10, insbesondere die Ladeluft, eine höhere Temperatur auf als am Eintrittsstutzen 7, insbesondere als am Ladelufteintrittsstutzen. In diesem anderen Betriebszustand wird die Ladeluft beispielsweise erwärmt.

Mittels der zweiten turbulenzerzeugenden Einlage 12 wird der Wärmeübertrag von der zu kühlenden Ladeluft auf die Scheibenpaare 11 und damit auf das Kühlmittel KM verbessert. Insbesondere wird dadurch die wärmeübertragende Fläche vergrößert.

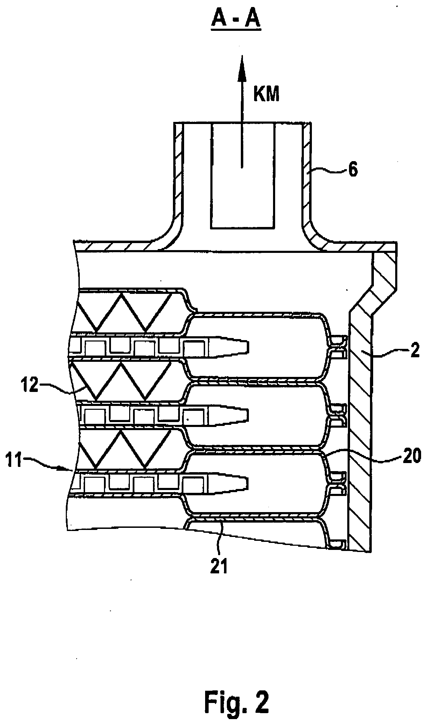

**Figur 2** zeigt eine Schnittdarstellung A-A durch den Wärmetauscher 1. Gleiche Merkmale sind mit den gleichen Bezugszeichen versehen wie in den vorherigen Figuren.

Ein Scheibenpaar 11 wird dabei durch eine erste Scheibe 20 und eine zweite Scheibe 21 gebildet. Im dargestellten Ausführungsbeispiel sind die erste Scheibe 20 und die zweite Scheibe 21 im Wesentlichen gleich ausgebildet.

Die erste Scheibe 20 ist bezüglich der zweiten Scheibe 21 im Wesentlichen um 180° gekippt. Die erste Scheibe 20 und die zweite Scheibe 22 sind dabei im Wesentlichen derart ausgestaltet, dass die erste Scheibe 20 im Wesentlichen einen zugehörigen Deckel zur zweiten Scheibe 21 bildet, im Wesentlichen den zugehörigen Topf bildet, wobei im dargestellten Ausführungsbeispiel der Deckel und der zugehörige Topf im Wesentlichen gleich ausgebildet sind. In einem anderen Ausführungsbeispiel ist die erste Scheibe 20 anders ausgebildet als die zweite Scheibe 21.

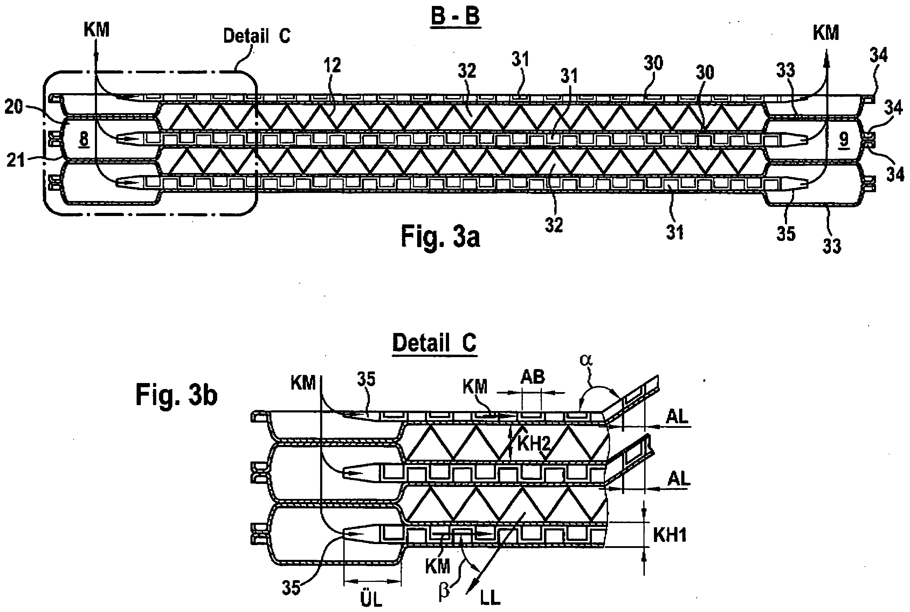

**Figur 3a** zeigt eine Schnittdarstellung B-B durch den Wärmetauscher 1, wobei die **Figur 3b** das Detail C der Schnittdarstellung B-B darstellt. Gleiche Merkmale sind mit den gleichen Bezugszeichen versehen wie in den vorherigen Figuren.

Die erste Scheibe 21 bzw. die im Wesentlichen gleich ausgebildete, insbesondere identische Scheibe 21 weisen im dargestellten Ausführungsbeispiel einen im Wesentlichen als ebene Fläche verlaufenden mittleren Bereich auf. An diesem nicht näher bezeichneten mittleren Bereich schließen sich an den beiden Enden im Wesentlichen zungenförmige insbesondere im Wesentlichen halbkreisförmige nicht näher bezeichnete Endbereiche an. Diese zungenförmigen Endbereiche sind als im Wesentlichen ringförmige, napfförmige Ausprägung ausgebildet.

Die im Wesentlichen ringförmig napfförmige Ausprägung 33 umschließt eine im Wesentlichen halbkreisförmig ausgebildete Öffnung. In einem anderen nicht dargestellten Ausführungsbeispiel ist die napfförmige Ausprägung im Wesentlichen dreiecksförmig und/oder vier- bzw. vielecksförmig bzw. zumindest abschnittsweise ellipsen- oder kreisförmig ausgebildet bzw. als eine Kombination der zuvor genannten Formen. Die Scheiben 20, 21 eines Scheibenpaares 11 weisen jeweils einen Rand 34 auf, der im Wesentlichen umlaufend um die Scheibe ausgebildet ist. Insbesondere an diesem Randbereich sind die benachbarten Scheiben 20 und 21, die ein Scheibenpaar bilden, miteinander formschlüssig, insbesondere durch Falzen, Krimpen, Bördeln, und/oder stoffschlüssig, beispielsweise durch Löten, Schweißen, Kleben usw., miteinander verbunden.

Die Scheiben 20, 21 werden zumeist aus Blech, wie beispielsweise aus Aluminiumblech oder aus einem anderen metallischen Blech wie Stahl oder Edelstahl durch ein umformendes und/oder trennendes Fertigungsverfahren hergestellt. Insbesondere werden die nicht näher bezeichneten Öffnungen, welche von den napfförmigen, im Wesentlichen ringförmigen Ausprägungen umschlossen werden, durch Stanzen bzw. Pressen oder mit einem anderen Fertigungsverfahren wie beispielsweise Bohren bzw. Lasern bzw. Strahlschneiden, wie beispielsweise Wasserstrahl- oder Laserstrahlschneiden, ausgebildet. Die Bleche, welche die Scheiben 21 bzw. 20 bilden, sind einseitig oder beidseitig lotplattiert. In einem anderen Ausführungsbeispiel sind die Bleche, welche die Scheiben 20, 21 bilden, nicht lotplattiert.

Eine Vielzahl von Scheibenpaaren, die jeweils durch eine erste Scheibe 20 und eine zweite Scheibe 21 gebildet werden, werden vorkassettiert und insbesondere aufeinander gestapelt. Dabei wird in ein Scheibenpaar, d. h. zwischen einer ersten Scheibe 20 und einer zweiten Scheibe 21, eine erste turbulenzerzeugende Einlage 30 eingebracht. Die Scheibenpaare werden übereinander gestapelt, wobei zwischen den Scheibenpaaren, insbesondere im Bereich des zweiten Strömungskanals 32 eine zweite turbulenzerzeugende Einlage 12 eingebracht ist. Die zweite turbulenzerzeugende Einlage 12 ist im Wesentlichen als Wellrippe ausgebildet. Die turbulenzerzeugende Einlage 12 ist im Wesentlichen aus einem dünnen Metallblech, insbesondere Aluminiumblech, mit eingestanzten Kiemen ausgebildet. Die zweite turbulenzerzeugende Einlage 12 ist im Wesentlichen ziehharmonikaförmig ausgebildet und ist einseitig oder beidseitig lotplattiert. In einem anderen Ausführungsbeispiel ist die turbulenzerzeugende Einlage 12 nicht lotplattiert. Beim stoffschlüssigen Verbinden wird die turbulenzerzeugende Einlage 12 zumindest abschnittsweise mit zumindest einer Scheibe 21, 20 bzw. mit zumindest einem Scheibenpaar 11 verbunden. In einem anderen Ausführungsbeispiel ist die turbulenzerzeugende Einlage 12 burgzinnenförmig und/oder wellenförmig ausgebildet.

Zwei benachbarte Scheiben 20, 21 eines Scheibenpaares 11 umschließen einen ersten Strömungskanal 31. In dem zumindest einen ersten Strömungskanal 31, insbesondere in den ersten Strömungskanälen 31, sind erste turbulenzerzeugende Einlagen 30 angeordnet. Die ersten turbulenzerzeugenden Einlagen 30 sind im Wesentlichen aus einem metallischen Blech, wie beispielsweise Aluminium oder Kupfer oder Edelstahl oder aus einem anderen Metall bzw. einem anderen wärmeleitfähigen Material ausgebildet. Die ersten turbulenzerzeugenden Einlagen 30 werden zumeist durch Umformen, wie beispielsweise Pressen, Prägen usw. derart ausgebildet, dass sie im Wesentlichen eine burgzinnenförmige Gestalt aufweisen. In einem anderen Ausführungsbeispiel können sie ziehharmonikaförmig ausgebildet sein. In einem weiteren Ausführungsbeispiel können sie im Wesentlichen wellenförmig ausgebildet sein. Die ersten turbulenzerzeugenden Einlagen können einseitig und/oder beidseitig lotplattiert sein. Die Turbulenzeinlagen weisen im Querschnitt eine im Wesentlichen gebogene Kante auf, die im Wesentlichen rechteckig und/oder dreieckig und/oder vieleckig bzw. zumindest bereichsweise wellenförmig verläuft. Das burgzinnenförmige Profil weist dabei im Wesentlichen u-förmige Bereiche auf, wobei die u-förmigen Bereiche im Wesentlichen als ein rechteckförmiges U ausgebildet ist, d. h. das U weist im Wesentlichen zwei Parallele gegenüberliegende Seiten auf, die im Wesentlichen als Strecken ausgebildet sind. Die nicht näher bezeichneten Endbereiche der Strecke werden durch eine weitere im Wesentlichen geradenförmig ausgebildete Strecke verbunden, wobei die verbindende Strecke mit den beiden anderen Strecken im Wesentlichen einen Winkel von 90° bildet. Derartige im Wesentlichen als rechteckförmiges bzw. eckiges U ausgebildete Elemente schließen sich aneinander an, derart, dass die u-förmigen Bereiche derart versetzt angeordnet sind, dass sie burgzinnenförmig sich aneinander anschließen bzw. miteinander verbunden sind.

Die verbindende Strecke weist die Ausprägungsbreite AB auf. Die Ausprägungsbreite AB verläuft im Wesentlichen parallel zur Kühlmittelströmungsrichtung KM. In einer Ebene, welche mit der Kühlmittelströmungsrichtung KM einen Winkel α einschließt, ist die erste turbulenzerzeugende Einlage 30 im Wesentlichen ebenfalls burgzinnenförmig ausgebildet. Der Winkel α nimmt Werte zwischen 0° und 90°, insbesondere zwischen 20° und 90°, insbesondere zwischen 35° und 90°, insbesondere Werte zwischen 40° und 90°, insbesondere Werte zwischen 50° und 90°, insbesondere Werte zwischen 60° und 90°, insbesondere Werte zwischen 70° und 90°, insbesondere Werte zwischen 80° und 90°, an bzw. α = 90°. In der genannten Ebenenrichtung weist die erste turbulenzerzeugende Einlage 30 ebenso ein Profil auf, welches aus im Wesentlichen eckigen U-Elementen zusammengesetzt ist, die sich derart abwechseln, dass sie burgzinnenförmig, insbesondere im Wesentlichen burgzinnenförmig angeordnet sind. In der genannten Ebenenrichtung weist die verbindende Strecke die Ausprägungslänge AL auf.

Das erste turbulenzerzeugende Element 30 ist derart ausgebildet, dass über den gesamten Bereich alle Strecken, insbesondere Ausprägungsbreiten AB gleich groß sind. In einem anderen Ausführungsbeispiel sind die Strecken, insbesondere die Ausprägungsbreiten AB vom Zuführkanalbereich 8 nicht größer ausgebildet bzw. weisen größere Werte auf als im inneren Bereich, d. h. in einem Bereich in der Mitte der turbulenzerzeugenden Einlage 30. In Richtung des Abführkanals 9 nimmt die Ausprägungsbreite AB weiter ab. In einem anderen Ausführungsbeispiel ist der umgekehrte Fall vorgesehen, wonach im Zuführkanalbereich 8 die Ausprägungsbreite AB zunächst größere Werte aufweist und in Richtung der Mitte und weiter Richtung des Abführkanalbereichs 9 kleinere Werte AB annimmt bzw. aufweist. Die erste turbulenzerzeugende Einlage 30 kann dabei derart ausgebildet sein, dass die Ausprägungsbreite AB kontinuierlich abnimmt oder in einem anderen Ausführungsbeispiel kontinuierlich zunimmt oder in einem anderen Ausführungsbeispiel sich degressiv oder progressiv vergrößert bzw. verkleinert. In einem weiteren Ausführungsbeispiel weist die Ausprägungsbreite AB in einem ersten Bereich kontinuierlich einen bestimmten Wert auf und in einem sich daran anschließenden Bereich einen anderen Wert auf, der größer oder kleiner oder in einem weiteren Ausführungsbeispiel gleich dem vorhergehenden Ausprägungsbreitenwert AB aufweist bzw. entspricht. In einem weiteren Ausführungsbeispiel kann die Ausprägungsbreite AB alternierend größere Werte und wieder kleine Werte annehmen. Das zur Ausprägungsbreite AB Gesagte gilt alles analog auch für die Ausprägungslänge AL der ersten turbulenzerzeugenden Einlage 30.

Die erste turbulenzerzeugende Einlage 30 ist im Wesentlichen in einem Endabschnittsbereich 35, der zumindest bereichsweise im Zuführkanal 8 und/oder im Abführkanal 9 angeordnet ist, weist eine Überstandslänge ÜL auf. Im Bereich der Überstandslänge ÜL ragt die erste turbulenzerzeugende Einlage in den Zuführkanal 8 und/oder in den Abführkanal 9 hinein. Durch die im Wesentlichen stauwehrartige Ausbildung des Endabschnittsbereichs 35 kann Kühlmittel besonders vorteilhaft in den ersten Strömungskanal 31 einströmen bzw. aus dem ersten Strömungskanal 9 in den Abführkanal 9 herausströmen. In dem Endabschnittsbereich 35 ist das erste turbulenzerzeugende Element v- oder u-kanalförmig ausgebildet. Auf diese Weise erfolgt eine besonders vorteilhafte Beströmung des ersten Strömungskanals 31, insbesondere der ersten Strömungskanäle 31 aus dem Zuführkanal 8 bzw. eine besonders vorteilhafte Abströmung in den Abführkanal 9.

Die ersten turbulenzerzeugenden Elemente 30 und/oder die zweiten turbulenzerzeugenden Elemente 12 versteifen den Wärmetauscherblock 4 besonders vorteilhaft, insbesondere die ersten Scheiben 20 und die zweiten Scheiben 21 bzw. die Scheibenpaare 11, so dass diese der Pulsation der durchströmenden Ladeluft und der daraus folgenden Dauerbeanspruchung gewachsen sind. Auf diese Weise wird besonders vorteilhaft die Dauerhaltbarkeit des Wärmetauschers erhöht. Die Überlappungslänge ÜL nimmt Werte zwischen 0mm und 15 mm, insbesondere Werte zwischen 0mm und 12 mm, insbesondere Werte zwischen 0mm und 10 mm, insbesondere Werte zwischen 0mm und 8 mm, insbesondere Werte zwischen 0mm und 7 mm, insbesondere Werte zwischen 0mm und 6,5 mm, insbesondere Werte zwischen 0mm und 4,5 mm, insbesondere Werte zwischen 0mm und 3,25 mm, insbesondere Werte zwischen 0mm und 2mm an.

Die zu kühlende Ladeluft strömt in Richtung LL durch den Wärmetauscher 1 bzw. durch den Wärmetauscherblock 4. Dabei ist die Strömungsrichtung des Kühlmittels mit KM und die Richtung der Ladeluft mit LL bezeichnet. Die Kühlmittelrichtung KM und die Ladeluftströmungsrichtung LL weisen einen Winkel β auf, wobei der Winkel β Werte zwischen 10° und 90°, insbesondere zwischen 35° und 90°, insbesondere zwischen 45° und 90°, insbesondere zwischen 50° und 90°, insbesondere zwischen 60° und 90°, insbesondere zwischen 70° und 90° annimmt. In einem anderen Ausführungsbeispiel nimmt der Winkel β den Wert 90° an.

Die Ausprägungsbreite AB und/oder die Ausprägungslänge AL nimmt Werte zwischen 0,01 mm und 8 mm, insbesondere Werte zwischen 0,01 mm und 7 mm, insbesondere Werte zwischen 0,01 mm und 5 mm, insbesondere zwischen 0,01 mm und 3 mm, insbesondere Werte zwischen 0,1 mm und 3 mm an.

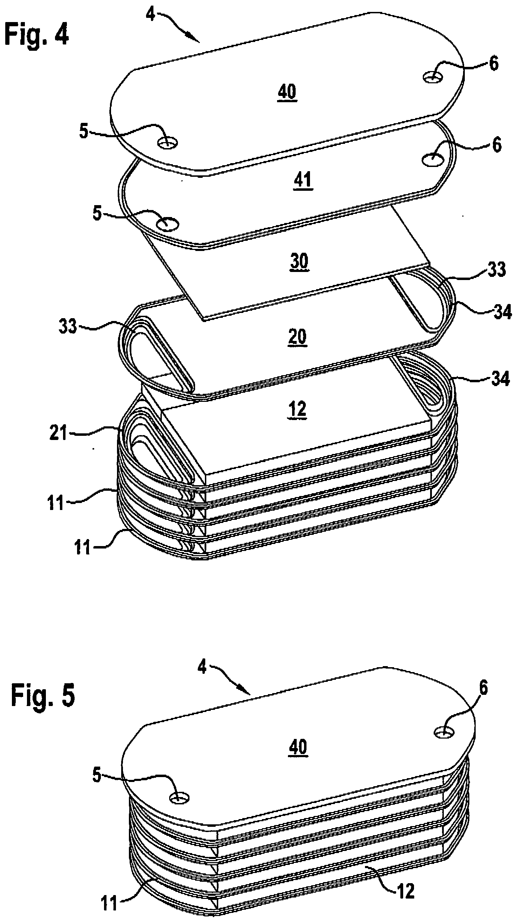

**Figur 4** zeigt eine Explosionsdarstellung des Wärmetauscherblocks 4 während **Figur 5** eine isometrische Darstellung des Wärmetauscherblocks 4 des Wärmetauschers 1 darstellt. Gleiche Merkmale sind mit den gleichen Bezugszeichen versehen.

Figur 4 zeigt dabei eine alternative Ausführungsform auf, wobei der Deckel 3 aus Figur 1 im Wesentlichen aus einer ersten Deckelscheibe 40 und einer zweiten Deckelscheibe 41 ausgebildet ist. In einem anderen Ausführungsbeispiel ist lediglich eine erste Deckelscheibe 40 vorgesehen. In einem weiteren Ausführungsbeispiel sind die erste Deckelscheibe 40 und die zweite Deckelscheibe 41 einteilig ausgebildet.

Die erste Deckelscheibe 40 und/oder die zweite Deckelscheibe 41 weisen dabei zumindest eine Öffnung, die im Wesentlichen kreisförmig, in einem anderen Ausführungsbeispiel rechteckförmig oder ellipsenförmig ausgebildet ist, für den Kühlmitteleintritt 5 und eine im Wesentlichen ebenso ausgebildete Öffnung für den Kühlmittelaustritt 6 aus. In einem weiteren Ausführungsbeispiel sind die erste Deckelscheibe 40 und die zweite Deckelscheibe 41 im Wesentlichen stoffschlüssig durch Schweißen, Löten, Kleben usw. und/oder formschlüssig durch Verkrimpen bzw. Falzen miteinander verbunden.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Wärmetauscher zur Ladeluftkühlung für einen Verbrennungsmotor eines Kraftfahrzeugs, aufweisende mehrere Scheiben (20, 21),
wobei zwei benachbarte Scheiben (20, 21) zumindest ein Scheibenpaar (11) sowie zumindest einen ersten Strömungskanal (31) zur Durchströmung für ein Kühlmittel bilden,
wobei zwischen zwei benachbarten Scheibenpaaren (11) zumindest bereichsweise ein zweiter Strömungskanal (32) zur Durchströmung für Ladeluft ausgebildet ist und die Scheibenpaare (11) einen Wärmetauscherblock (4) bilden, wobei zumindest bereichsweise in dem zumindest einen ersten Strömungskanal (31) zwischen den benachbarten Scheiben (20, 21) zumindest eine turbulenzerzeugende Einlage (30) angeordnet ist, **dadurch gekennzeichnet, dass** die turbulenzerzeugende Einlage zumindest einen stauwehrartig ausgebildeten Endabschnittsbereich (35) zur Einström- bzw. zur Ausströmverbesserung des Kühlmittels in den bzw. aus dem zumindest einen ersten Strömungskanal (31), sowie zur Festigkeitssteigerung des Wärmetauscherblocks (4) aufweist, wobei der Endabschnittsbereich (35) auf einer Überstandslänge (ÜL) in zumindest einen Zuführkanal (8) und/oder in zumindest einen Abführkanal (9) des Wärmetauscherblocks (4) ragt und die turbulenzerzeugende Einlage (30) in dem Endabschnittsbereich (35) v- oder u-kanalförmig ausgebildet ist

2. Wärmetauscher nach Anspruch1, **dadurch gekennzeichnet, dass** die zumindest eine turbulenzerzeugende Einlage (30) Z mit zumindest einer Scheibe (20, 21) verbunden und/oder einstückig mit der zumindest einen Scheibe (20, 21) ausgebildet ist.

3. Wärmetauscher nach einem der vorhergehenden Ansprüche, **dadurch gekennzeichnet, dass** die zumindest eine turbulenzerzeugende Einlage (30) zumindest bereichsweise labyrinthartig ausgebildet ist und/oder im Wesentlichen burgzinnenförmige Ausprägungen aufweist.

4. Wärmetauscher nach Anspruch 3, **dadurch gekennzeichnet, dass** die Ausprägungen zumindest eine Ausprägungsbreite (AB) aufweisen, wobei die Ausprägungsbreite (AB) in zumindest einer Strömungsrichtung (KM) des Kühlmittels, zumindest abschnittsweise, steigt und/oder gleich bleibt und/oder abnimmt.

5. Wärmetauscher nach einem der Ansprüche 3 oder 4, **dadurch gekennzeichnet, dass** die Ausprägungen zumindest eine Ausprägungslänge (AL) aufweisen, wobei die zumindest eine Ausprägungslänge (AL) in eine Richtung zumindest abschnittsweise steigt und/oder gleich bleibt und/oder abnimmt und die Richtung einen Winkel (α) zu einer Strömungsrichtung (KM) des Strömungsmittels aufweist.

6. Wärmetauscher nach einem der vorhergehenden Ansprüche, **dadurch gekennzeichnet, dass** zumindest eine Scheibe (20, 21) zumindest eine napfartige Einprägung (33) zur Beabstandung der Scheibe (20, 21) von einem benachbarten Scheibenpaar (11) aufweist.

7. Wärmetauscher nach einem der vorhergehenden Ansprüche, **dadurch gekennzeichnet, dass** in dem zumindest einen zweiten Strömungskanal (32) zumindest ein zweites turbulenzerzeugendes Element (12) zur Verbesserung der Wärmeübertragung zwischen Ladeluft und Kühlmittel vorgesehen ist.

8. Wärmetauscher nach einem der vorhergehenden Ansprüche, **dadurch gekennzeichnet, dass** ein Verhältnis zwischen einer ersten Kanalhöhe (KH1) des ersten Strömungskanals (31) zu einer zweiten Kanalhöhe (KH2) des zweiten Strömungskanals (32) zwischen 1 : 1,5 und 1 : 5, insbesondere zwischen 1 : 2 und 1 : 4 ist.

9. Wärmetauscher nach einem der vorhergehenden Ansprüche, **dadurch gekennzeichnet, dass** zumindest ein Gehäuse (2) den Wärmetauscherblock (4) zumindest bereichsweise aufnimmt und/oder insbesondere zumindest als Saugrohrabschnitt eines Saugrohrs für einen Verbrennungsmotor und/oder zumindest als Kompressorgehäuseabschnitt eines Kompressorgehäuses ausgebildet ist.

10. Wärmetauscher nach einem der vorhergehenden Ansprüche, **dadurch gekennzeichnet, dass** zumindest eine Strömungsrichtung (KM) des Kühlmittels mit der zumindest einen Strömungsrichtung (LL) der Ladeluft einen Winkel (β) bildet.

11. Verwendung eines Wärmetauschers (1) nach einem der vorhergehenden Ansprüche als Ladeluftkühler und/oder als Abgaskühler.

12. Verfahren zur Herstellung eines Wärmetauschers (1) nach einem der Ansprüche 1 bis 11 aufweisend folgende Verfahrensschritte:
- Herstellung der zumindest einen Scheibe (20, 21) mittels eines umformenden Fertigungsverfahrens.
- Bilden von Scheibenpaaren (11), welche zumindest jeweils 2 Scheiben (20, 21) und zumindest eine erste turbulenzerzeugende Einlage (30) aufweisen.
- Stoffschlüssiges und/oder formschlüssiges Verbinden der Scheiben (20, 21), Scheibenpaare (11) und der zumindest einen ersten turbulenzerzeugenden Einlage (30).

## Claims

1. A heat exchanger for cooling charge air for an internal combustion engine of a motor vehicle, having several discs (20, 21), wherein two adjacent discs (20, 21) form at least one disc pair (11) as well as at least one first flow channel (31) through which a coolant can flow, wherein a second flow channel (32) through which charge air can flow is formed, at least in sections, between two adjacent disc pairs (11) and the disc pairs (11) form a heat exchanger block (4), wherein at least one turbulence-generating insert (30) is arranged, at least in sections, in the at least one first flow channel (31) between the adjacent discs (20, 21), **characterised in that** the turbulence-generating insert has at least one end section area (35) formed in a weir-like shape for improving the inflow and outflow of the coolant into the and out of the at least one first flow channel (31) and for increasing the strength of the heat exchanger block (4), wherein the end section area (35) protrudes, on a protrusion length (ÜL), into at least one inlet channel (8) and/or into at least one outlet channel (9) of the heat exchanger block (4) and the turbulence-generating insert (30) in the end section area (35) is formed like a V- or U-channel.

2. The heat exchanger as claimed in claim 1, **characterised in that** the at least one turbulence-generating insert (30) is connected to at least one disc (20, 21) and/or is integrally formed with the at least one disc (20, 21).

3. The heat exchanger as claimed in one of the preceding claims, **characterised in that** the at least one turbulence-generating insert (30) is formed, at least in sections, like a labyrinth, and/or has substantially merlon-shaped forms.

4. The heat exchanger as claimed in claim 3, **characterised in that** the forms have at least one form width (AB), wherein the form width (AB) increases and/or stays the same and/or decreases in at least one flow direction (KM) of the coolant, at least in sections.

5. The heat exchanger as claimed in one of claims 3 or 4, **characterised in that** the forms have at least one form length (AL), wherein the at least one form length (AL) increases and/or stays the same and/or decreases in one direction, at least in sections, and the direction has an angle (α) to a flow direction (KM) of the flow medium.

6. The heat exchanger as claimed in one of the preceding claims, **characterised in that** at least one disc (20, 21) has at least one bowl-like imprint (33) in order to space the disc (20, 21) from an adjacent disc pair (11) apart.

7. The heat exchanger as claimed in one of the preceding claims, **characterised in that** at least one second turbulence-generating element (12) for improving the heat exchange between charge air and coolant is provided in the at least one second flow channel (32).

8. The heat exchanger as claimed in one of the preceding claims, **characterised in that** a ratio between a first channel height (KH1) of the first flow channel (31) to a second channel height (KH2) of the second flow channel (32) is between 1:1.5 and 1:5, in particular between 1:2 and 1:4.

9. The heat exchanger as claimed in one of the preceding claims, **characterised in that** at least one housing (2) receives the heat exchanger block (4) at least in sections and/or is in particular formed at least as suction tube section of a suction tube for an internal combustion engine and/or at least as compressor housing section of a compressor housing.

10. The heat exchanger as claimed in one of the preceding claims, **characterised in that** at least one flow direction (KM) of the coolant forms an angle (β) with the at least one flow direction (LL) of the charge air.

11. Use of a heat exchanger (1) as claimed in one of the preceding claims as charge air cooler and/or as exhaust gas cooler.

12. A method for producing a heat exchanger (1) as claimed in one of claims 1 to 11, the method having the following steps:
- Producing the at least one disc (20, 21) by means of a forming manufacturing method.
- Creating disc pairs (11) which have at least 2 discs (20, 21) and at least one turbulence-generating insert (30), respectively.
- Connecting the discs (20, 21), disc pairs (11) and the at least one turbulence-generating insert (30) in a firmly bonded and/or positive manner.

## Revendications

1. Echangeur de chaleur servant au refroidissement d'air de suralimentation pour un moteur à combustion interne d'un véhicule automobile, ledit échangeur de chaleur présentant plusieurs plaques (20, 21), où deux plaques contiguës (20, 21) forment au moins une paire de plaques (11) ainsi qu'au moins un premier conduit d'écoulement (31) servant à la circulation d'un liquide de refroidissement, où, entre deux paires de plaques contiguës (11), un deuxième conduit d'écoulement (32) est configuré au moins partiellement pour la circulation d'air de suralimentation, et les paires de plaques (11) forment un bloc d'échangeur de chaleur (4), où au moins une pièce intercalaire (30) produisant des turbulences est disposée au moins partiellement dans le premier conduit d'écoulement (31) au moins au nombre de un configuré entre les plaques contiguës (20, 21), **caractérisé en ce que** la pièce intercalaire produisant des turbulences présente au moins une zone partielle d'extrémité (35) configurée comme un barrage et servant à l'amélioration du flux d'entrée ou de sortie du liquide de refroidissement entrant dans le premier conduit d'écoulement (31) au moins au nombre de un ou bien sortant de celui-ci, et servant aussi à l'augmentation de la résistance du bloc d'échangeur de chaleur (4), où la zone partielle d'extrémité (35) pénètre, sur une longueur de projection (ÜL), dans au moins un conduit d'alimentation (8) et / ou dans au moins un conduit d'évacuation (9) du bloc d'échangeur de chaleur (4), et la pièce intercalaire (30) produisant des turbulences est configurée, dans la zone partielle d'extrémité (35), en forme de v ou de u.

2. Echangeur de chaleur selon la revendication 1, **caractérisé en ce que** la pièce intercalaire (30) au moins au nombre de un, produisant des turbulences, est assemblée avec au moins une plaque (20, 21) et / ou est configurée en formant une seule et même pièce avec la plaque (20, 21) au moins au nombre de un.

3. Echangeur de chaleur selon l'une des revendications précédentes, **caractérisé en ce que** la pièce intercalaire (30) au moins au nombre de un, produisant des turbulences, est configurée au moins partiellement à la manière d'un labyrinthe et / ou présente des parties saillantes essentiellement en forme de créneaux.

4. Echangeur de chaleur selon la revendication 3, **caractérisé en ce que** les parties saillantes présentent au moins une largeur de partie saillante (AB), où la largeur de partie saillante (AB), dans au moins une direction d'écoulement (KM) du liquide de refroidissement, augmente et / ou reste identique et / ou diminue, au moins partiellement.

5. Echangeur de chaleur selon l'une des revendications 3 ou 4, **caractérisé en ce que** les parties saillantes présentent au moins une longueur de partie saillante (AL), où la longueur de partie saillante (AL) au moins au nombre de un augmente et / ou reste identique et / ou diminue, au moins partiellement dans une direction, et la direction présente un angle (α) par rapport à une direction d'écoulement (KM) du moyen d'écoulement.

6. Echangeur de chaleur selon l'une quelconque des revendications précédentes, **caractérisé en ce qu'**au moins une plaque (20, 21) présente au moins une partie en creux (33), en forme de coupelle, servant à l'espacement de la plaque (20, 21) par rapport à une paire de plaques contiguës (11).

7. Echangeur de chaleur selon l'une quelconque des revendications précédentes, **caractérisé en ce qu'**il est prévu, dans le deuxième conduit d'écoulement (32) au moins au nombre de un, au moins un deuxième élément (12) produisant des turbulences et servant à l'amélioration de la transmission de chaleur entre l'air de suralimentation et le liquide de refroidissement.

8. Echangeur de chaleur selon l'une quelconque des revendications précédentes, **caractérisé en ce qu'**un rapport entre une première hauteur de conduit (KH1) du premier conduit d'écoulement (31), et une deuxième hauteur de conduit (KH2) du deuxième conduit d'écoulement (32), est compris entre 1 : 1,5 et 1 : 5, en particulier compris entre 1 : 2 et 1 : 4.

9. Echangeur de chaleur selon l'une quelconque des revendications précédentes, **caractérisé en ce qu'**au moins un carter (2) loge au moins partiellement le bloc d'échangeur de chaleur (4) et / ou est conçu en particulier au moins comme une partie d'un collecteur d'admission pour un moteur à combustion interne et / ou au moins comme une partie d'un carter de compresseur.

10. Echangeur de chaleur selon l'une quelconque des revendications précédentes, **caractérisé en ce qu'**au moins une direction d'écoulement (KM) du liquide de refroidissement forme un angle (β) avec la direction d'écoulement (LL) au moins au nombre de un de l'air de suralimentation.

11. Utilisation d'un échangeur de chaleur (1) selon l'une quelconque des revendications précédentes, comme un refroidisseur d'air de suralimentation et / ou comme un refroidisseur de gaz d'échappement.

12. Procédé de fabrication d'un échangeur de chaleur (1) selon l'une quelconque des revendications 1 à 11, présentant les étapes de procédé qui suivant :
- fabrication de la plaque (20, 21) au moins au nombre de un, au moyen d'un procédé de fabrication par formage.
- formation de paires de plaques (11) qui présentent à chaque fois au moins 2 plaques (20, 21) et au moins une première pièce intercalaire (30) produisant des turbulences.
- assemblage par continuité de matière et / ou par complémentarité de forme, des plaques (20, 21), des paires de plaques (11) et de la première pièce intercalaire (30) au moins au nombre de un, produisant des turbulences.
